# EUROPEAN PATENT APPLICATION

(11) **EP 4 841 571 A1**
(43) Date of publication of application: **18.11.2026**
(21) Application number: 25290017.0
(22) Date of filing: 12.05.2025
(51) Int. Cl.: G06T 9/00

(54) **COMPRESSION OF A THREE-DIMENSIONAL POINT CLOUD**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: Bechihi, Adel, 35708 RENNES CÉDEX 7 (FR); Bouttier, Arnaud, 35708 RENNES CÉDEX 7 (FR)
(74) Representative: Plasseraud IP

(57) **Abstract**

A method for compressing a three-dimensional point cloud comprises fitting sub-sets of data points with respective clusters (i), each cluster having a section (Sᵢ) and being bounded by two boundary planes (π_{1_i}, π_{2_i}) both parallel to the section. Each cluster is determined by a respective set of values for cluster parameters that comprise three-dimensional coordinates (x_{1_i}, x_{2_i}, x_{3_i}) relating to a location of the cluster, two angles (φᵢ, ψᵢ) determining an orientation of a plane (π_{0_i}) that contains the section, shape-and-size parameters determining a shape and a size of the section, and a thickness (tᵢ) determining a separating distance between both boundary planes. The clusters may be used for assigning respective total information quantifying values to points in an environment, and then triggering collection of additional sensing results in a portion of the environment where the total information quantifying values are lower.

## Description

The present disclosure relates to a method for compressing a three-dimensional point cloud, and to a device and a data collecting system that implement such method.

### -- BACKGROUND OF THE INVENTION --

Acquiring knowledge about a physical environment is crucial for many applications including robotics such as path planning, trajectory optimization and obstacle avoidance, surveillance and monitoring, mobile object tracking, etc. Knowledge of the environment content is acquired through repeated sensing operations that detect obstacles existing in the environment. For example, light-based detection and ranging measurements, commonly known as LiDAR measurements, are very efficient for providing information about obstacle positions and shapes in a rapid and easy-to-implement manner. Principle of LiDAR measurement is well known at present time and numerous publications are available about it.

Using multiple sensors which are separate in space for performing the measurements and then gathering the sensing results from all sensors provides an improved knowledge about the environment content thanks to multiplying the lines-of-sight toward at least some of the elements of the environment content. This requires having the multiple sensors which perform the measurements located apart from one another, at fixed respective locations or onboard mobile carriers. For example, mobile carriers which are very convenient are unmanned aerial vehicles, also known as UAVs or flying drones. In particular, UAVs are convenient for operating in disaster-stricken regions or dangerous areas.

Using multiple sensors has further advantages including the following ones:
- improved accuracy and reliability of the measurement results thanks to measurement redundancy and possible cross-checking;
- sensor redundancy enhances reliability of the whole system since failure of one of the sensors can be compensated for by the other sensors;
- increased geographical coverage and range thanks to the multiple sensors being distributed in space;
- multiple-sensor system can adapt to time-varying environments more easily, in particular when some of the sensors are onboard mobile carriers;
- robustness against noise affecting the sensing results can be provided by multiple-sensor implementation, for example by filtering out noise or interference which differ from one sensor to another;
- optimization of resources such as power, bandwidth, computation, etc. is possible by intelligently assigning respective tasks to be performed by the sensors;
- improved decision-making operation can result from the preceding advantages, in particular for autonomous systems; and
- multiple-sensor systems may be less expensive than a single high-reliability and large-coverage unit.

Multiple-sensor systems can operate either in a centralized way or in a distributed way for collecting the sensing results and using them for building the knowledge of the environment content. In a centralized operation, all sensors transmit their respective sensing results to a common data-processing unit which builds a digital representation of the environment content from all the sensing results and stores it. But such centralized operation is sensitive to failures possibly affecting the common data-processing unit, and each sensor must remain in the transmission range from this common data-processing unit. In addition, data processing and storage capacities of the common data-processing unit may be difficult to increase if further sensors are to be added. Implementing a distributed operation avoids or alleviates these drawbacks. But all these environment sensing architectures which are intended to operate in real-time or almost real-time with respect to changes occurring in the environment suffer from huge data amounts to be transmitted through radiocommunication between separated units that are involved with the task of acquiring the knowledge of the environment. The radiocommunication may be either between a remote sensing unit and a central data-collecting unit in case of a centralized operation architecture or between two remote sensing units in case of a distributed operation architecture.

Using data compression methods before transmission through radiocommunication have already been proposed, for example using octree-based spatial partitioning, wavelet transforms, Gaussian splatting and deep learning algorithms. In a known manner, lossy compression methods achieve higher compression ratio values than lossless compression methods. But the resulting data amounts are still very important and produce latencies in obtaining an updated digital representation of the environment content with respect to changes which are ongoing in this environment. Such latencies are most detrimental to applications that involve tracking of mobile elements existing in the environment or to applications that involve obstacle avoidance.

It has also been proposed to dimension and manage the radiocommunication resources available to the communicating units to allow transmission of the important data amounts, but this may not be sufficient for some applications.

Other issues relate to the storage and computational resources that are available at each of the communicating units.

Starting from this situation, one object of the present invention consists in proposing a new data compression method that solves or alleviates the above listed issues. In particular, the invention aims at providing sensing data compression efficient for applications where the sensing data are produced from aerial vehicles using sensing systems pointing downwards, for example toward environment content elements located close to ground.

Another object of the invention aims at providing a simple method for selecting portions in the environment where acquisition of additional sensing results would especially enrich the already-acquired knowledge.

### -- SUMMARY OF THE INVENTION --

For meeting at least one of these objects or others, a first aspect of the present invention proposes a method for compressing a three-dimensional point cloud comprised of data points, this method comprising fitting sub-sets of the data points with respective clusters, each cluster having a section and being bounded by two boundary planes both parallel to the section, and being determined by a respective set of values for cluster parameters that comprise:
- three-dimensional coordinates relating to a location of the cluster;
- two angles determining an orientation of a plane that contains the section of the cluster;
- shape-and-size parameters determining a shape and a size of the section of the cluster; and
- a thickness determining a separating distance between both boundary planes of the cluster.

Such cluster type proposed by the invention especially suits environment content elements that are sensed from the air, in particular landscape elements that are mainly located at ground level. But it also suits representing sensed element surfaces that have any orientation, including vertical surfaces. In addition, the proposed cluster type suits representing landscape elements that have finite thicknesses, i.e. non-zero thicknesses, such as a thickness of a vegetation cover in a land area.

Most often, the thickness value of one or each of the clusters may be less than at least one size value that quantifies a dimension of the section of this cluster. This happens in particular when the cluster fits data points relating to a smooth surface portion, for example a surface of a sensed landscape element.

In various implementations, shapes of the cluster sections may be any, including rectangles, triangles, or polygons in general. However, a section profile of each cluster as a function of two coordinates in the plane that contains the section of the cluster may preferably be defined by a kernel of Gaussian type. Such two-dimensional Gaussian kernel produces ellipse- or disk-shaped sections for the clusters.

Generally for the invention, a thickness profile of each cluster along a direction perpendicular to the boundary planes of this cluster may be uniform in a separating gap between these boundary planes and zero outside the separating gap. Such simple thickness profile participates in reducing a computational load that is implemented when processing the clusters.

Also generally for the invention, the method may further comprise at least one of the following transformations for adjusting a number of the clusters:
- merging at least two of the clusters into one new cluster; and
- splitting at least one of the clusters each into at least two new clusters.

Again generally for the invention, the method may further comprise transmitting the respective parameter value sets of the clusters through radiocommunication. In such case, the number of the clusters may advantageously be adjusted by performing cluster merging and cluster splitting transformations based on information relating to available data processing resources and/or radiocommunication resources.

In preferred implementations of the invention, each data point may be a sensing result indicating that a radiation-reflecting or radiation-diffusing surface has been sensed at a location in an environment indicated by the data point. In particular, each sensing result may be obtained using at least one sensing system performing a measurement in the environment, this sensing system comprising at least one of a LiDAR system, a depth camera system, a three-dimensional camera system, a stereo imaging system and a radar system.

For some applications, in particular indoor applications, the sensing system may be mounted on a fixedly located support.

In other possible applications, each sensing system may be onboard a mobile carrier, in particular an unmanned mobile carrier, preferably an unmanned aerial vehicle.

According to an optional improvement of the invention, which may be relevant when the data points are sensing results, the method may further comprise the following steps:
/i/ associating with each cluster an individual information quantifying distribution that assigns to points in the environment respective values that decrease as a function of a distance from the location of the cluster;
   and
/ii/ assigning a respective total information quantifying value to each of a plurality of points in the environment, as a sum of the respective values of the individual information quantifying distributions at this point calculated over the clusters; then
/iii/ triggering collection of additional sensing results in at least one portion of the environment where the total information quantifying values are lower.
Such improvement helps in efficiently and rapidly enriching the knowledge of the whole environment by automatically concentrating new measurements on environment portions that have been less explored before.

A second aspect of the invention proposes a computer program product comprising instruction codes such that, when executed by a processor, the instruction codes make the processor determining at least one cluster that fits data points, each cluster having a section and being bounded by two boundary planes both parallel to the section, and being determined by a respective set of values for the above-recited cluster parameters. Such computer program product may be further suitable for implementing the optional additional method features mentioned for the first invention aspect.

A third invention aspect proposes a device that comprises at least one sensing system, a data processing unit and a radiocommunication unit, wherein
the at least one sensing system is configured for producing sensing results by performing measurements on an environment of the device,
the data processing unit is configured for processing the sensing results so as to output compressed data relating to a content of the environment, and
the radiocommunication unit is configured for transmitting the compressed data, and wherein the data processing unit is further configured for implementing the method of the first invention aspect, possibly including its optional additional features. In particular, the data processing unit may further be configured for adjusting a number of the clusters based on a computational capacity and/or based on a throughput effective for the transmission of the compressed data by the radiocommunication unit.

In various embodiments, the device may be maintained on a fixedly located support or form a mobile unit, in particular an unmanned mobile unit, preferably an unmanned aerial vehicle.

Finally, a fourth invention aspect proposes a data collecting system, that comprises at least one device according to the third invention aspect, wherein the data collecting system is configured for executing the above-recited steps /i/ to /iii/.

These and other features of the invention will be now described with reference to the appended figures, which relate to preferred but not-limiting embodiments of the invention.

### -- BRIEF DESCRIPTION OF THE DRAWINGS --

Figure 1 shows a data collecting system which is suitable for implementing the invention.
Figure 2 is a block-diagram which shows components internal to one device of the data collecting system of Figure 1.
Figure 3 represents a cluster according to an implementation of the invention.
Figure 4 illustrates variations of an individual information quantifying distribution as implemented in an optional improvement of the invention.

For clarity sake, element sizes which appear in these figures do not correspond to actual dimensions or dimension ratios. Also, same reference numbers which are indicated in different ones of these figures denote identical elements of elements with identical function.

### -- DETAILED DESCRIPTION OF THE INVENTION --

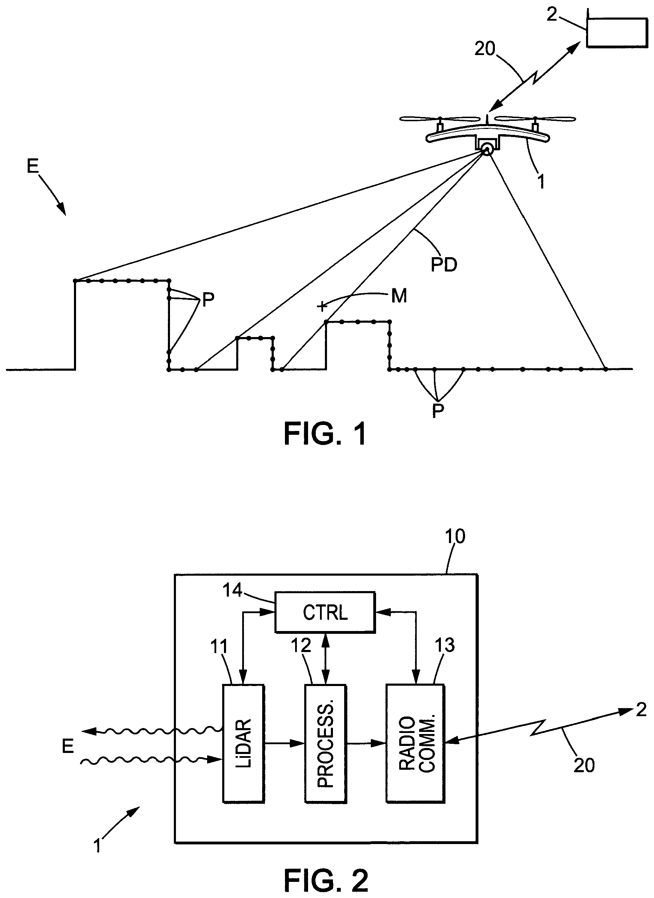

Referring to Figure 1, a data collecting system comprises at least two cooperating devices 1 and 2 used for collecting information about a content of an environment E. In the represented embodiment, device 1 is a remote sensing unit in the form of an unmanned aerial vehicle (UAV) which can perform measurements with content elements of the environment E. For a data collecting system with distributed architecture, device 2 may be another remote sensing unit of a same type as that of device 1 or another type. For a data collecting system with centralized architecture, device 2 may be an application server dedicated to collecting sensing results produced by device 1. For both architecture types, the data collecting system may comprise several devices capable of performing measurements with the environment content in parallel to each other. The devices 1 and 2 are connected to one another through a radiocommunication link 20. Possibly, the devices 1 and 2 may be connected through a communication network that comprises a terminal link of radio type to the device 1.

As shown in Figure 2, components internal to the device 1 may comprise:
- a carrier 10, of UAV-type in the present example, for carrying onboard the other device components;
- a sensing system 11, for example comprised of a LiDAR system, suitable for performing measurements with the environment content. Figure 2 symbolically shows LiDAR radiation emitted toward the environment E and sensed backscattered radiation;
- a data processing unit 12, denoted PROCESS. and suitable for processing sensing results produced by the sensing system 11, so as to output compressed data that correspond to the sensing results;
- a radiocommunication unit 13, denoted RADIO COMM. and suitable for transmitting the compressed data to the device 2; and
- a controller module 14, denoted CTRL and configured for controlling coordinated operations of the preceding components of device 1.

Generally, each sensing result produced by the sensing system 11 consists in an identification of a point in the environment E where a radiation-reflecting or radiation-diffusing surface exists. The point is identified using three coordinate values in a usual way, for example three cartesian coordinate values x₁, x₂ and x₃. For exploring the environment E, the controller module 14 triggers repeatedly the sensing system 11 for performing measurements with varying pointing direction PD, also commonly called line-of-sight of the sensing system 11. Hence, each measurement result is a data point that indicates a location in the environment E where an obstacle surface exits. Collection of all these data points forms a three-dimensional point cloud. Figure 1 schematically shows a content of the environment E comprised of horizontal ground portions and several structures with vertical surfaces, such as buildings. Spots P at the ground surface and the structure surfaces indicate respective data points produced by the sensing system 11 when scanning its pointing direction PD in the environment E. The data points are transmitted by the sensing system 11 to the data processing unit 12.

According to the present invention, the data processing unit 12 performs compression of the data amount constituted by the data points in view of transmission by the radiocommunication unit 13 with limited transmission payload size. The compression method that is implemented by the data processing unit 12 according to the invention is now described.

The principle of this data compression is to gather data points that belong to a flat one-piece surface portion of a sensed obstacle in a cluster selected to spatially fit these data points. A kernel is used for the cluster which suits the special case of the data points relating to obstacle surfaces viewed from above. This cluster most often has a thin three-dimensional shape, with a planar section of defined two-dimensional shape and identified in-space orientation, and the cluster thickness is defined perpendicular to its section. More specifically, the following parameters are used for defining each cluster i, i being an integer index used for individually identifying the clusters:
- three-dimensional coordinates x_{1_i}, x_{2_i} an x_{3_i} relating to a location of a center point of the cluster i relative to the environment E;
- two angles φᵢ and ψᵢ determining an orientation of a plane π_{0_i} of the section Sᵢ of the cluster i, for example polar angles of a vector Nᵢ that is perpendicular to the section plane π_{0_i}, with respect to the vertical axis x₃ and within the horizontal plane x₁-x₂;
- shape-and-size parameters determining a shape and a size of the section Sᵢ of the cluster i; and
- the thickness tᵢ of the cluster i as the separating distance between two boundary planes π_{1_i} and π_{2_i} that are parallel to the section plane π_{0_i} and bound the cluster i.

It is thus a feature of the clusters that each one is limited by both parallel boundary planes π_{1_i} and π_{2_i} identified for this cluster i, for example these boundary planes being symmetrical on opposite sides of the of the section plane π_{0_i} of the cluster i. The boundary planes π_{1_i}, π_{2_i} are parallel to the section Sᵢ and apart from each other with separating distance equalling the cluster thickness tᵢ. The cluster i has a thickness profile along a direction perpendicular to the boundary planes π_{1_i} and π_{2_i}, i.e. parallel to the vector Nᵢ, which is non-zero and uniform between these boundary planes, and which is constantly equal to zero outside the gap separating the boundary planes. For example, the thickness profile equals 1.0 between the boundary planes and 0 everywhere else.

The type and number of the shape-and-size parameters to be used depend on the two-dimensional cluster shape. For example, rectangular sections require three shape-and-size parameters: the rectangle length and width, and also an angle for determining the orientation of the rectangle about the vector Nᵢ. Three similar shape-and-size parameters are involved for elliptical sections: major and minor axes of the ellipse and one angle for determining the orientation of the ellipse about the vector Nᵢ. In both cases of rectangular and elliptical sections, identification of a cluster according to the invention requires nine parameters. However, other two-dimensional section shapes such as triangles or polygons with higher edge numbers may require more shape-and-size parameters. Most often, the thickness value tᵢ is less than the dimensions of the section Sᵢ that result from the values of the shape-and-size parameters.

Replacing several neighbouring data points P, typically more than three data points, with a corresponding cluster for transmission by the radiocommunication unit 13 yields a reduction in the transmission payload. This reduction is even more important when the cluster fits a large number of data points P. Possibly, the number of the clusters may be adjusted depending on the radiocommunication and computational resources of the data collecting system. The cluster number can be reduced by merging some of the neighbouring clusters, in particular when these neighbouring clusters are contiguous with each other and have same cluster section orientation. Conversely, the cluster number can be increased by splitting some of the clusters, in particular splitting large ones for better match with outlines of element surface portions sensed in the environment E.

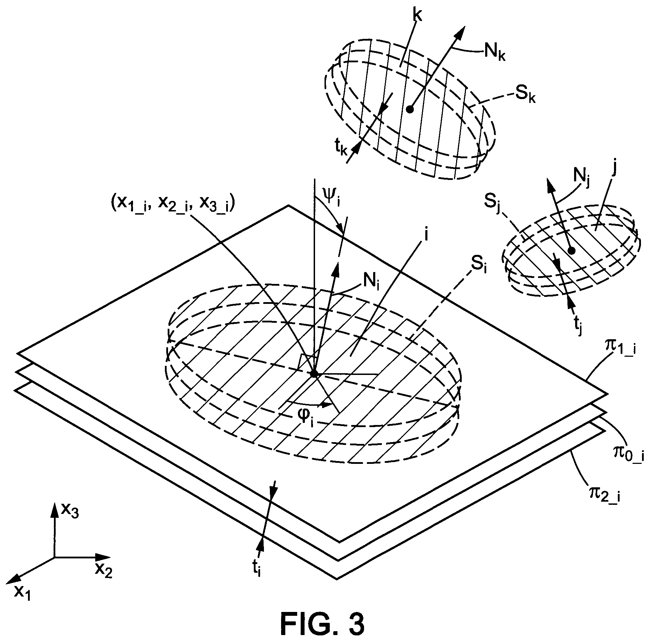

The description is now continued with the case of elliptical sections for the clusters. Figure 3 shows the cluster i when obtained in this way, as a hatched volume portion. Three positive shape-and-size parameters denoted aᵢ, bᵢ and cᵢ are used for determining the shape and size of the elliptical section Sᵢ of the cluster i in the plane π_{0_i}. Then a kernel of two-dimensional Gaussian type can be used for determining the section profile of the cluster i, according to the following equation eq. 1 in a particular case where the section Sᵢ is parallel to both cartesian axes x₁ and x₂: ${N}_{i} \left({x}_{1}, {x}_{2}\right) = exp \left(-\left[{x}_{1}-{x}_{1 _ i} {x}_{2}-{x}_{2 _ i}\right]⋅\left[\begin{matrix}{a}_{i} & {c}_{i} \\ {c}_{i} & {b}_{i}\end{matrix}\right]⋅\left[\begin{matrix}{x}_{1} - {x}_{1 _i} \\ {x}_{1} - {x}_{2 _i}\end{matrix}\right]\right)$ (eq. 1) where exp() denotes the exponential function. Then, the probability for an obstacle surface portion to be at the location x₁, x₂, x₃ is P(x₁, x₂, x₃) as follows: $P \left({x}_{1}, {x}_{2}, {x}_{3}\right) = min \left(1, ∭ {\sum }_{i} {U}_{i} \left({u}_{3}-{x}_{3}\right) ⋅ {N}_{i} \left({u}_{1}-{x}_{1},{u}_{2}-{x}_{2}\right) {du}_{1} {du}_{2} {du}_{3}\right)$ (eq. 2) where Uᵢ(x₃) denotes the function equaling 1 when x₃-value is in the range from x_{3_i} - tᵢ/2 to x_{3_i} + tᵢ/2, and equaling zero outside this range. The Man skilled in geometry is able to generalize the above equations eq. 1 and eq. 2 when the sections of the clusters are no longer parallel to both x₁- and x₂-axes, by referring to the normal vector Nᵢ associated to the section Sᵢ. Figure 3 also shows two other clusters j and k, with respective sections Sⱼ and Sₖ, normal vectors Nⱼ and Nₖ, and thicknesses tⱼ and tₖ. In addition, equations eq. 1 and eq. 2 apply at any time with sensing results that relate to this time.

The clusters disclosed herein especially allow efficient description of surfaces such as walls and furniture when the sensing device 1 is installed indoor, and also landscape surface portions for outdoor applications.

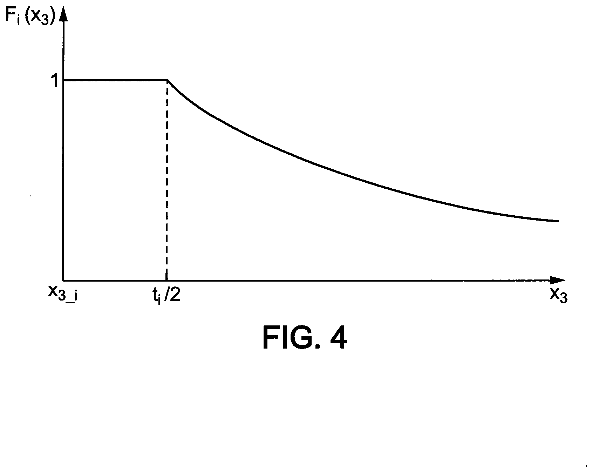

The following improvement consists in quantifying knowledge that has been acquired from already-collected sensed results relating to an environment. It may be useful for automatically controlling the sensing device, for example device 1 in Figure 1, to perform new measurements directed to space portions where the current knowledge is less. In particular, these new measurements are operated by orientating the pointing direction PD toward one of the environment portions with least already-available knowledge about its content. Possibly, device 1 may also be moved toward this environment portion for improving accuracy of the sensing results. One advantage of such self-driven exploration of the environment is that it can be run automatically, and even implemented at the sensing device, in particular when this sensing device is mobile. To this end, an individual information quantifying distribution Fᵢ is associated with each cluster i that has already been determined. This distribution Fᵢ assigns a respective value to any point M (see in Figure 1) in the environment E with coordinates x₁, x₂, x₃, that decreases as a function of the distance between this point M and the cluster location, typically the distance from the center point x_{1_i}, x_{2_i}, x_{3_i} of the cluster i. Possibly, the following equation eq. 3 may be used for distribution Fᵢ, again in the particular case of the section Sᵢ parallel to x₁- and x₂-axes, and for x₃-values higher than tᵢ/2 corresponding to free space in front of the obstacle surface: ${F}_{i} \left({x}_{1}, {x}_{2}, {x}_{3}\right) = {N}_{i} \left({x}_{1}, {x}_{2}\right) ⋅ exp \left[-\left({x}_{3}-{x}_{3 _ i}-{t}_{i}/2\right)\right]$ (eq. 3) Figure 4 displays variations of such Fᵢ-distribution as a function of the x₃-coordinate.

Then a total information quantifying value may be calculated for any point M free of already-sensed obstacle as follows: $F \left({x}_{1}{, x}_{2}{, x}_{3}\right) = {\sum }_{i} {F}_{i} \left({x}_{1}{, x}_{2}{, x}_{3}\right)$ (eq. 4) The Man skilled in geometry is also able to generalize equations eq. 3 and eq. 4 when the sections Sᵢ of the clusters i are no longer parallel to both x₁- and x₂-axes. For each cluster i, rotations are to be implemented for converting the x₃-axis as used in equation eq. 3 into the axis that is perpendicular to the cluster section Sᵢ. The Fᵢ-distributions additively combine in the F-distribution in a relevant way, in particular when the sections Sᵢ of neighboring clusters i are not parallel but continuous with one another. The gradient of F-distribution can be used for moving the pointing direction PD toward target environment portions where the values calculated for the F-distribution are lower.

## Claims

1. A method for compressing a three-dimensional point cloud comprised of data points (P), said method comprising fitting sub-sets of the data points with respective clusters (i), each cluster having a section (Sᵢ) and being bounded by two boundary planes (π_{1_i}, π_{2_i}) both parallel to the section, and being determined by a respective set of values for cluster parameters that comprise:
- three-dimensional coordinates (x_{1_i}, x_{2_i}, x_{3_i}) relating to a location of the cluster (i);
- two angles (φᵢ, ψᵢ) determining an orientation of a plane (π_{0_i}) that contains the section (Sᵢ) of the cluster (i);
- shape-and-size parameters determining a shape and a size of the section (Sᵢ) of the cluster (i); and
- a thickness (tᵢ) determining a separating distance between both boundary planes (π_{1_i}, π_{2_i}) of the cluster (i).

2. The method of claim 1, wherein a section profile of each cluster (i) as a function of two coordinates in the plane (π_{0_i}) that contains the section (Sᵢ) of the cluster is defined by a kernel of Gaussian type.

3. The method of claim 1 or 2, wherein a thickness (tᵢ) profile of each cluster (i) along a direction perpendicular to the boundary planes (π_{1_i}, π_{2_i}) of said cluster is uniform in a separating gap between said boundary planes and zero outside the separating gap.

4. The method of one of claims 1 to 3, further comprising at least one of the following transformations for adjusting a number of the clusters (i):
- merging at least two of the clusters (i) into one new cluster; and
- splitting at least one of the clusters (i) each into at least two new clusters.

5. The method of one of claims 1 to 4, further comprising transmitting the respective parameter value sets of the clusters (i) through radiocommunication.

6. The method of claims 4 and 5, wherein the number of the clusters (i) is adjusted based on information relating to available data processing resources and/or radiocommunication resources.

7. The method of one of claims 1 to 6, wherein each data point (P) is a sensing result indicating that a radiation-reflecting or radiation-diffusing surface has been sensed at a location in an environment (E) indicated by the data point.

8. The method of claim 7, wherein each sensing result is obtained using at least one sensing system (11) performing a measurement in the environment (E), the sensing system comprising at least one of a LiDAR system, a depth camera system, a three-dimensional camera system, a stereo imaging system and a radar system.

9. The method of claim 8, wherein each sensing system (11) is onboard a mobile carrier (10), in particular an unmanned mobile carrier, preferably an unmanned aerial vehicle.

10. The method of one of claims 7 to 9, further comprising the following steps:
/i/ associating with each cluster (i) an individual information quantifying distribution that assigns to points (M) in the environment (E) respective values that decrease as a function of a distance from the location of the cluster; and
/ii/ assigning a respective total information quantifying value to each of a plurality of points (M) in the environment (E), as a sum of the respective values of the individual information quantifying distributions at said point calculated over the clusters (i); then
/iii/ triggering collection of additional sensing results in at least one portion of the environment (E) where the total information quantifying values are lower.

11. A computer program product comprising instruction codes such that, when executed by a processor, the instruction codes make the processor determining at least one cluster (i) that fits data points (P), each cluster having a section (Sᵢ) and being bounded by two boundary planes (π_{1_i}, π_{2_i}) both parallel to the section, and being determined by a respective set of values for cluster parameters that comprise:
- three-dimensional coordinates (x_{1_i}, x_{2_i}, x_{3_i}) relating to a location of the cluster (i);
- two angles (φᵢ, ψᵢ) determining an orientation of a plane (π_{0_i}) that contains the section (Sᵢ) of the cluster (i);
- shape-and-size parameters determining a shape and a size of the section (Sᵢ) of the cluster (i); and
- a thickness (tᵢ) determining a separating distance between both boundary planes (π_{1_}i, π_{2_i}) of the cluster (i).

12. The computer program product of claim 11, suitable for implementing the method of one of claims 1 to 10.

13. A device (1) comprising at least one sensing system (11), a data processing unit (12) and a radiocommunication unit (13), wherein
the at least one sensing system (11) is configured for producing sensing results by performing measurements on an environment (E) of the device (1),
the data processing unit (12) is configured for processing the sensing results so as to output compressed data relating to a content of the environment (E), and
the radiocommunication unit (13) is configured for transmitting the compressed data,
and wherein the data processing unit (12) is further configured for implementing the method of one of claims 1 to 10.

14. The device (1) of claim 13, wherein the data processing unit (12) is further configured for adjusting a number of the clusters (i) based on a computational capacity and/or based on a throughput effective for the transmission of the compressed data by the radiocommunication unit (13).

15. A data collecting system, comprising at least one device (1) according to claim 13 or 14, wherein the data collecting system is configured for
associating with each cluster (i) an individual information quantifying distribution that assigns to points (M) in the environment (E) respective values that decrease as a function of a distance from the location of the cluster; and
assigning a respective total information quantifying value to each of a plurality of points (M) in the environment (E), as a sum of the respective values of the individual information quantifying distributions at said point calculated over the clusters (i); and
triggering collection of additional sensing results in at least one portion of the environment (E) where the total information quantifying values are lower.
